# EUROPEAN PATENT SPECIFICATION

(11) **EP 2 712 766 B1**
(45) Date of publication and mention of the grant of the patent: **06.04.2016**
(21) Application number: 12186849.1
(22) Date of filing: 01.10.2012
(51) Int. Cl.: B60R 7/04, B60R 11/02

(54) **Apparatus for receiving a digital data storage medium**
Vorrichtung zum Empfangen eines digitalen Datenspeichermediums
Appareil pour recevoir un support de stockage de données numériques

(43) Date of publication of application: 02.04.2014
(73) Proprietor: Alpine Electronics, Inc., Tokyo (JP)
(72) Inventor: Geilinger, Manfred, 70567 Stuttgart (DE); Dannehl, Magnus, 70567 Stuttgart (DE); Fuchs, Robert, 70567 Stuttgart (DE)
(74) Representative: Klunker . Schmitt-Nilson . Hirsch

(56) References cited:
- WO-A2-03/047912
- WO-A2-2006/115855
- FR-A1- 2 831 499
- US-A1- 2002 163 215
- US-A1- 2004 080 173
- US-A1- 2006 012 202
- US-A1- 2008 121 479
- US-B1- 6 663 155

## Description

The invention is related to an apparatus for receiving a digital data storage medium and in particular to an apparatus which is configured to be placed in the passenger compartment of a vehicle.

Receiving devices which are configured to receive exchangeable data storage media, as e.g. SD-cards, USB-sticks etc., are commonly provided in the passenger compartment of vehicles in order to allow to provide digital data, as e.g. music data or map data, for the entertainments system and/or the navigation system of the vehicle.

According to US 6 663 155 B1 a console-stored video display unit is provided that can be extended to a viewing position wherein the video display unit is adjustable both about a vertical pivot axis as well as a horizontal pivot axis to allow tilting and other reorientation of the video display unit to provide for optimal viewing results by occupants of the passenger compartment of a vehicle. In addition, the video display unit, when extended to the viewing position, can be vertically adjusted to place the video display unit in an optimal viewing height for whatever the ergonomic considerations happen to be for occupants of the vehicle interior. The display unit also includes a console interface portion forming a smooth, aesthetically-pleasing surface for the console when the display unit is positioned in a retracted position within the console.

WO 03/047912 A2 discloses a covering piece for a vehicle passenger compartment, in particular to an instrument panel or centre console, comprising a screen which can be swung out from a non-use position to an in-use position. Said covering piece comprises at least one guide element, which is hinged on said covering piece, on the one hand, and on said screenon the other hand, the hinge axes of which extend substantially parallel to each other. Preferably, two guide elements are provided, which are each hinged on the covering piece, on the one hand, and on the screen, on the other hand, the hinge axes of which extend parallel to each other.

Known receiving devices, however, consume additional space in the instrument panel or the centre console of the vehicle or are difficult to access in case they are located in the glove compartment.

A problem to be solved by the invention is to provide a user friendly and space saving receiving device allowing an ergonomically improved design of the vehicle's passenger compartment.

Said problem is solved by an apparatus for receiving a digital data storage medium, the apparatus being adapted to be arranged in a vehicle, in particular in the passenger compartment of the vehicle, and comprising: a stationary unit comprising an opening in a front portion of its top surface and a cover formed in a rear portion of its top and being adapted to be fixed to at least a part of the vehicle; a movable unit comprising at least one receiving device which is configured for receiving the digital data storage medium; at least one communication device, which is configured for communicating with the digital data storage medium in order to write data into the digital data storage medium and/or to read data from the digital data storage medium; and being movable with respect to the stationary unit between an open position, in which the receiving device is located below the opening so that a digital data storage medium is insertable into and removable from the receiving device, and a closed position, in which the receiving device is located under the cover so that the digital data storage medium, which has been inserted into the receiving device, is covered by at least a part of one of the movable and the stationary unit, so that the digital data storage medium is not visible from outside the apparatus. The movable unit further comprises at least one electrical input device, which is configured to receive an input command from a user.

The invention is further related to a vehicle comprising at least one apparatus for receiving a digital data storage medium according to the invention.

The apparatus for receiving a digital data storage medium may be located in a centre console, between the rear seats and/or at the instrument panel of the vehicle allowing an easy and user friendly access to the apparatus and/or providing an optically appealing eye catcher.

The invention combines the functionality of a digital data storage media receiving device with the functionality of an input device, which may be used to control e.g. a window lifter, the entertainment and/or navigation system etc. of the car. This combination saves space in the passenger compartment and allows an ergonomically advantageous design of the vehicle's control elements. As the inserted digital data storage medium is not visible, when the movable unit of the apparatus has been moved into the closed position, the digital data storage medium is secured against unintended removal and does not deteriorate the design of the vehicle's interior, in particular of the instrument panel and/or the centre console.

In an embodiment the movable unit is configured to perform an at least partially rotating motion with respect to the stationary unit when moving between the open and the closed position.

A rotating motion is easy to implement and allows an easy movement of the movable unit between its open and closed positions.

In an embodiment the movable unit is configured to perform an at least partially translational motion with respect to the stationary unit when moving between the open and the closed positions.

A translational motion provides an additional option of moving the stationary unit between its open and the closed positions, which may be advantageous from an ergonomic point of view.

In an embodiment the movable unit comprises the at least one receiving device and is configured so that the digital data storage medium, which has been inserted into the receiving device, is moved under a portion forming part of an outer surface of the stationary unit, so that the digital data storage medium is not visible from outside the apparatus when the movable unit is moved into its closed position.

Moving the digital data storage medium under an outer surface of the stationary unit provides an advantageous way of covering the digital data storage medium when the movable unit is moved into its closes position.

In an embodiment the digital data storage medium, which has been inserted into the receiving device, is elevated, when the movable unit is moved from its closed position into its open position. Elevating the digital data storage medium when moving the movable unit into its open position allows an easy access to the digital data storage medium in order to remove it from the receiving device.

In an embodiment the movable unit comprises two legs. A first leg may house the receiving device and a second leg may serve as a handle for moving the movable unit. A movable unit comprising two legs is easy to handle and allows to securely house the receiving device and the digital data storage medium, respectively.

In an embodiment the movable unit is provided with an electrical output device, which is configured to display an output to a user. Providing the movable unit with an electrical output device allows an ergonomic and space saving output of data to a user.

In an embodiment the electrical output device is integral with the electrical input device, e.g. in the form of a touchpad and/or a touchscreen. Integrating the electrical output device with the electrical input device enhances the functionality of the apparatus even further and saves even more space, as the same space is used for the input device as for the output device. A touchpad and a touchscreen respectively provide a very convenient, user friendly and optically appealing input/output device.

In an embodiment the input and/or output device at least partially covers the stationary unit, when the movable unit is arranged in its closed position. This configuration provides a very space saving receiving apparatus.

In an embodiment the apparatus further comprises at least one driving device, which is configured for driving the movable unit between the open and the closed position. Such a driving device enhances the usability of the apparatus even further, as it facilitates the movement of the the movable unit between its open and its closed positions.

In an embodiment the apparatus further comprises at least one damping device, which is configured to damp the motion of the movable unit. A damping device enhances the usability of the apparatus even further, as it causes a very smooth movement of the the movable unit between its open and its closed positions.

The driving device and/or the damping device may comprise an elastic unit and/or an electric motor, respectively. An elastic unit, as e.g. a spring, provides a cheap an reliable driving and/or damping device. An electric motor allows an convenient control of the movement of the movable unit.

In an embodiment the apparatus further comprises at least one locking mechanism which is configured for locking the movable unit in its open and/or its closed position in order to avoid an unintended movement of the movable unit.

The mechanism may be implement in the form of a push-push-mechanism, which is locked and unlocked by pushing the movable unit allowing to lock and unlock the movable unit very conveniently.

In an embodiment the receiving device is configured to receive at least one of a SD-card, a micro SD-card and a USB-stick. SD-cards, micro SD-cards and USB-sticks are common digital data storage media, which are commonly used in order to transfer digital data e.g. to vehicles' entertainment and/or navigation systems.

In an embodiment the at least one communication means comprises at least one electrical contact for contacting the digital data storage medium in order to communicate with a digital data storage medium as e.g. SD-cards, micro SD-cards and USB-sticks, which respectively comprise electrical contacts for transferring digital data to and/or from the digital data storage medium.

In an embodiment the at least one communication means is configured for wireless communication with the digital data storage medium in order to communicate with digital data storage medium, as e.g. RFID-chips, which are configured for the wireless transfer of data.
Figure 1 shows a perspective view of an exemplary embodiment of an apparatus according to the invention.
Figure 2 shows an exploded perspective view of an exemplary embodiment of an apparatus according to the invention.
Figure 3a shows a perspective view of an exemplary embodiment of an apparatus according to the invention in a closed position.
Figure 3b shows a perspective view of an exemplary embodiment of an apparatus according to the invention in an unlocking position.
Figure 3c shows a perspective view of an exemplary embodiment of an apparatus according to the invention in a partially open position.
Figure 3d shows a perspective view of an exemplary embodiment of an apparatus according to the invention in an completely open position.

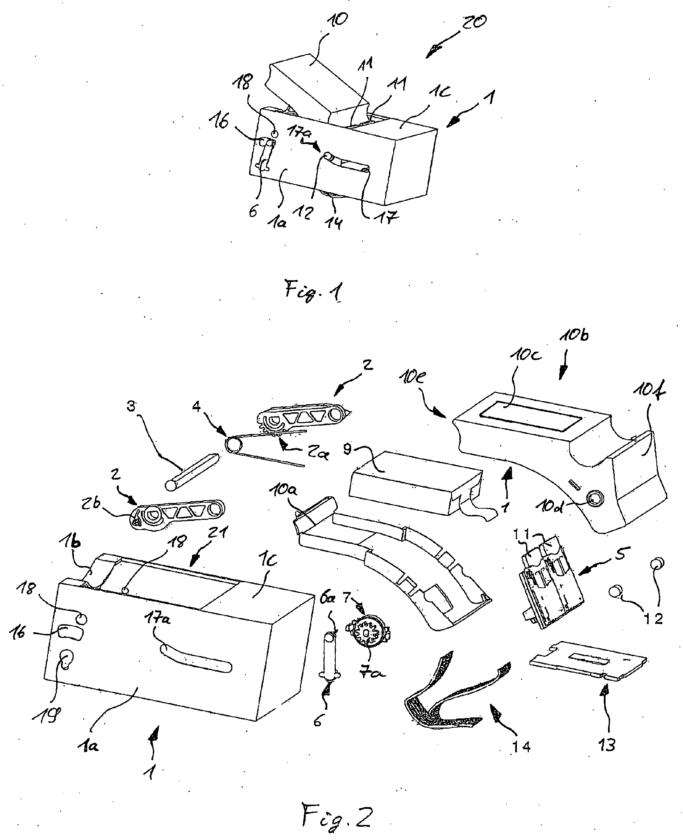

Figure 1 shows a perspective isometric view and figure 2 shows an exploded perspective view of an exemplary embodiment of an apparatus 20 for receiving at least one digital data storage medium 11 according to the invention.

In the following description the portion shown on the left side of the figures is referred to as the front portion of the apparatus 20 and the portion shown on the right side of the figures is referred to as the rear portion.

The apparatus 20 comprises a stationary unit 1 having the form of a cuboid with a rectangular opening 21 provided in a front portion of its top surface.

Two opposing side walls 1a of the cuboid respectively comprise an elongated slide opening 17 extending basically parallel to the top surface of the cuboid. The elongated slide openings 17 respectively comprise a slightly elevated end portion 17a facing the front portion of the stationary unit 1.

The side walls 1a further respectively comprise opposing circular axle openings 18, which are configured for receiving an axle 3 to extend between the two side walls 1a of the stationary unit 1.

Below the axle openings 18 an upper flip-flop lever opening 16 and a lower flip-flop lever opening 16 are formed, in order to accommodate a flip-flop lever 6, which will be described in more detail below.

The apparatus 20 further comprises a movable unit 10 formed by a base 10a and a corresponding cover 10b, the movable unit 10 being basically L-shaped comprising a first leg 10e and a second leg 10f.

An input and/or output device 9, which may be a touch screen or a touch pad, is arranged within the first leg 10e between the base 10a and the cover 10b. A window 10c is formed in the top surface of the cover 10b in order to allow access to the input and/or output device 9. The input and/or output device 9 may comprise a lighting allowing to illuminate the input and/or output device 9 from behind.

The movable unit 10 further comprises a receiving device 5, which is arranged in the second leg 10f, in order to accommodate two digital data storage media 11.

In the embodiment shown in the figures the receiving device 5 is provided in the form of an SD-card holder 5, which is configured to receive and accommodate two SD-cards 11. Alternatively or additionally, the receiving device 5 may be configured to receive micro SD-cards, USB-devices, RFID-chips, or similar digital data storage media.

The receiving device 5 further includes a communication device in order to allow communication between the digital data storage media 11 accommodated in the receiving device 5 and an electric control unit 13, which is also housed within the apparatus 20. If the digital data storage medium 11 to be received by the receiving device 5 is an SD-card, a micro SD-card or a USB-device, the communication device will include electrical contacts in order to electrically contact the digital data storage medium 11. If the digital data storage medium 11 to be received by the receiving device 5 comprises an RFID-chip, the communication device will include an RFID-transmitter.

A bendable flatband wire 14 electrically connects the electrical control 13 to the receiving device 5 and to the input and/or output device 9.

The sidewalls of the second leg 10f respectively comprises a bearing 10d in order to receive disc shaped bearing elements 12, which are respectively introduced into the elongated slide opening 17 formed in the side walls 1a of the stationary unit 1, when the movable unit 10 is introduced into the stationary unit 1.

The bearing elements 12 allow for a rotational motion of the movable unit 10 with respect to the stationary unit 1 around the axis defined by the bearings 10d and the bearing elements 12 in combination with a translational motion of the movable unit 10 along the elongation of the elongated slide openings 17 formed in the sidewalls 1a of the stationary unit 1.

Due to the inclination of the front end portions 17a of the elongated slide openings 17, the movable unit 10 is elevated with respect to the stationary unit 1, when it is moved near the front portion of the stationary unit 1.

An axle 3 extends between the two axle openings 18 provided in the two side walls 1a of the stationary unit 1. The axle 3 supports two crank levers 2 so that they are rotatable around the axle 3. The ends of the crank levers 2 distant from the axle 3 are rotatably fixed to the base 10a so that the crank levers 2 will pivot around the axle 3 when the movable unit 10 is rotated around the axis defined by the bearing elements 12 in order to be moved between its closed and open positions.

A spring 4 providing an elastic element is supported by the axle 3 and in contact with the stationary unit 1 and at least one of the crank levers 2 in order to store and provide the energy for driving the movable unit 10 into an open position protruding out of the opening 21 formed in the stationary unit 1, as it is shown in figure 1.

At least one of the crank levers 2 comprises a rounded portion formed around the axle 3. The rounded portion is provided with a gearing 2a being in meshing engagement with a corresponding gearing 7a of a wheel damper element 7, which is arranged within a stationary unit 1, in order to damp the movement of crank levers 2 and of the movable unit 10.

At least one of the crank levers 2 is provided with a locking opening 2b, which is configured to receive a pin 6a of a flip-flop lever 6, which is arranged laterally outside the stationary unit 1 and extends through the upper and lower flip-flop lever openings 16, 19, which are formed in the side wall 1a of the stationary unit 1, into its interior. Due to the form of the flip-flop opening 2b formed in the crank lever 2, the flip-flop lever 6 will lock the crank lever 2 and the movable unit 10 in their closed positions, in which the first leg 10e of the movable unit 10 is arranged basically parallel to the top surface of the stationary unit 1, when the movable unit 10 is moved from its open position into its closed position.

Due to the shape of the elongated slide openings 17, the receiving device 5 and the digital data storage media 11 located within the receiving device are moved under a cover 1c formed in a rear portion of the top of the stationary unit 1 so that they are neither visible nor accessible from outside the apparatus 20, when the movable unit 10 is moved into its closed position.

When the first leg 10e of the movable unit 10 is pressed down again, after it has been locked in its closed position, the shape of the flip-flop opening 2b provided in the crank lever 2 causes the flip-flop lever 6 to move into an unlocked position allowing the movable unit 10 to move from its closed position into an open position, in which it protrudes through the opening 21 provided in the top surface of a stationary unit 1, as it is shown in figure 1.

As also visible in figure 1, the shape of the elongated slide openings 17 causes the movable unit 10 to slide forward and upward exposing the receiving device 5 and the digital data storage media 11 accommodated within said receiving device 5 providing easy access to said digital data storage media 11.

A depression 1 b is formed in a front portion of the upper surface of the stationary unit 1 in order to allow a convenient handling and in particular pushing of the first leg 10e of the movable unit 10.

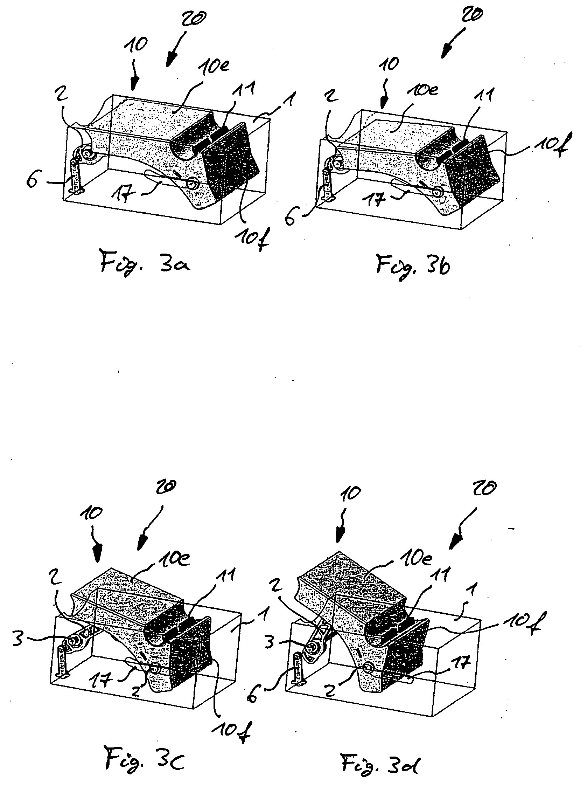

Figures 3a to 3d illustrate the movement of the movable unit 10 from its closed and locked position into its open position in more detail.

For simplicity and clarity of the illustration the window 10c provided in the cover 10a of the moveable unit 10 and the underlying input and/or output device 9 are not shown in figures 3a to 3d. Furthermore, the stationary unit 1 is shown transparent, in order to clearly illustrate the movement of the movable unit 10.

In figure 3a the movable unit 10 is arranged in its closed and locked position, in which the first leg 10e of the movable unit 10 is arranged parallel to the top surface of the stationary unit 1.

The movable unit 10 is fixed in this position by means of the cooperation of the flip-flop lever 6 and the corresponding flip-flop opening 2b formed in at least one of the crank levers 2, as it has been described before with reference to figure 2.

In said closed position the bearing elements 12 are located at the rear end of the elongated slide opening 17, so that the receiving device 5 (not visible) and the digital data storage media 11, which are accommodated within said receiving device 5, are arranged below the cover 1c (which is not shown in figurs 3a to 3d) provided at the rear portion of the top surface of the stationary unit 1 so that they are neither visible nor accessible from outside the apparatus 20.

In order to move the movable unit 10 into its open position, the first leg 10e of the movable unit 10 is pushed down, as it is shown in figure 3b.

This downward movement, in which the movable unit 10 is rotated around the axis defined by the bearing elements 12, slightly rotates the crank levers 2 in clockwise direction. This rotation of the crank levers 2 causes the flip-flop lever 6 to move from its locking position into an unlocking position, in which it allows the crank levers 2 to rotate around the axle 3 in the opposite, counter-clockwise direction.

In consequence, as soon as the pressure, which as been applied for pressing down the movable unit 10, is released, the movable unit 10 is driven by the spring 4, which is not visible in figures 3a to 3d, to rotate in clockwise direction around the axis defined by the bearing elements 12 in order to pivot out of the opening 21 formed in the upper surface of the stationary unit 1.

As the distance between the axle 3 and the movable unit 10 is fixed by the crank levers 2, said rotating motion will cause an additional sliding motion of the bearing elements 12 along the elongated slide opening 17 formed in the side walls 1a of the stationary unit 1. Said sliding motion causes the movable unit 10 not only to pivot out of the stationary unit 1 but also to slide towards the front portion of the stationary unit 1, as shown in figure 3c.

The final, completely open position of the movable unit 10 is shown in figure 3d. When the movable unit 10 has reached this position, the bearing elements 12 are located at the front end 17a of the elongated slide openings 17, so that the receiving device 5 and the digital data storage media 11 arranged within said storage device 5 are located below the opening 21 formed in the upper surface of the stationary unit 1, which allows an easy access to said digital data storage media 11 in order to remove them from the receiving device 5 and/or to enter the same or different digital data storage media 11 into said receiving device 5.

Due to the upward inclination of the front ends 17a of the elongated slide openings 17, the second leg 10f of the movable unit 10 comprising the receiving device 5 is elevated, which allows an even more convenient access to the digital data storage media 11 located in the receiving device 5.

The skilled person will easily understand that the embodiment shown in the figures is only an exemplary embodiment and that different embodiments are possible and will fall within the scope of protection as long as they are covered by the appended claims.

For example, the receiving device 5 needs not to be accommodated within the movable unit 10 but alternatively may be accommodated within the stationary unit 1 as long as the movement of the movable unit 10 selectively allows and disallows access to the digital data storage media 11.

Instead of a wheel damping mechanism 7, as it is shown in figure 2, a spring damping mechanism or any other kind of damping mechanism may be used. Alternatively to using a spring 4 for driving the movable unit 10 other driving means, as e.g. an electric motor, may be employed.

As an alternative to guiding the movable unit 10 by means of a combination of elongated openings 17 and crank levers 2 a four-bar-mechanism and/or a double crank mechanism may be implemented. Examples of these mechanisms are shown in the VDI Guideline 2145 "Planar, four-bar linkages" ("Ebene viergliedrige Getriebe mit Dreh- und Schubgelenken").

The invention provides a compact receiving apparatus 20 for at least one digital data storage medium 11. The apparatus 20 may be placed at a plurality of positions in a vehicle's passenger compartment e.g. on the instrument panel, at the centre console, in the doors or between the rear seats of the vehicle.

## Claims

1. Apparatus (20) for receiving a digital data storage medium (11), the apparatus (20) being adapted to be arranged in a vehicle, in particular in the passenger compartment of the vehicle, and comprising:
a stationary unit (1) comprising an opening (21) in a front portion of its top surface and a cover (1c) formed in a rear portion of its top and being adapted to be fixed to at least a part of the vehicle;
a movable unit (10) comprising
at least one receiving device (5), which is configured for receiving the digital data storage medium (11);
at least one communication device, which is configured for communicating with the digital data storage medium (11) in order to write data into the digital data storage medium (11) and/or to read data from the digital data storage medium (11); and
being movable with respect to the stationary unit (1) between
an open position, in which the receiving device (5) is located below the opening (21) so that a digital data storage medium (11) is insertable into and removable from the receiving device (5), and
a closed position, in which the receiving device (5) is located under the cover (1c) so that the digital data storage medium (11), which has been inserted into the receiving device (5), is covered by at least a part of one of the moveable unit (10) and the stationary unit (1), so that the digital data storage medium (11) is not visible from outside the apparatus (20);
wherein the movable unit (10) comprises at least one electrical input device (9), which is configured to receive an input command from a user.

2. Apparatus (20) of claim 1, wherein the movable unit (10) is configured to perform an at least partially rotating motion with respect to the stationary unit (1) when moving between the open position and the closed position.

3. Apparatus (20) of claim 1 or 2, wherein the movable unit (10) is configured to perform an at least partially translational motion with respect to the stationary unit (1) when moving between the open position and the closed position.

4. Apparatus (20) of any of the preceding claims, wherein the movable unit (10) comprises the at least one receiving device (5) and wherein the digital data storage medium (11), which has been inserted into the receiving device (5), is moved under a portion (1c) forming part of an outer surface of the stationary unit (1), so that the digital data storage medium (11) is not visible from outside the apparatus (20) when the movable unit (10) has been moved into its closed position.

5. Apparatus (20) of claim 4, wherein the digital data storage medium (11), which has been inserted into the receiving device (5), is elevated, when the movable unit (10) is moved from its closed position into its open position.

6. Apparatus (20) of claim 4 or 5, wherein the movable unit (10) comprises two legs, in particular a first leg housing the receiving device (5) and a second leg serving as a handle for moving the movable unit (10).

7. Apparatus (20) of any of the preceding claims, wherein the movable unit (10) is provided with an electrical output device (9) being configured to display an output to a user.

8. Apparatus (20) of claim 7, wherein the electrical output device (9) is integral with the electrical input device (9), e.g. in the form of a touchpad and/or a touchscreen, the electrical input/output device (9) in particular comprising a lighting for illuminating at least parts of the electrical input/output device (9) from behind.

9. Apparatus (20) of claim 7 or 8, wherein the input and/or output device (9) at least partially covers the stationary unit (1), when the movable unit (10) is arranged in its closed position.

10. Apparatus (20) of any of the preceding claims, further comprising at least one driving device (4) being configured for driving the movable unit (10) between the open and closed positions.

11. Apparatus (20) of any of the preceding claims, further comprising at least one damping device (7) being configured for damping the motion of the movable unit (10).

12. Apparatus (20) of claim 10 or 11, wherein the driving device (4) and/or the damping device (7) comprises an elastic unit.

13. Apparatus (20) of any of the preceding claims, further comprising at least one locking mechanism (6, 6a, 2b) which is configured for locking the movable unit (10) in its open position and/or its closed position.

14. Apparatus (20) of any of the preceding claims, wherein the receiving device (5) is configured to receive at least one of a SD-card, a micro SD-card and a USB-stick.

15. Vehicle comprising at least one apparatus (20) for receiving a digital storage medium (11) of any of the preceding claims, wherein the apparatus (20) for receiving a digital storage medium (11) is in particular located in a centre console, between the rear seats and/or at the instrument panel of the vehicle.

## Patentansprüche

1. Vorrichtung (20) zum Aufnehmen eines digitalen Speichermediums (11), wobei die Vorrichtung (20) eingerichtet ist, in einem Fahrzeug, insbesondere in einem Passagierraum des Fahrzeugs, angeordnet zu werden und aufweist:
eine stationäre Einheit (1) mit einer Öffnung (21) in einem vorderen Bereich ihrer oberen Fläche und einer Abdeckung (1c), die in einem hinteren Bereich ihrer Oberseite ausgebildet und eingerichtet ist, an wenigstens einem Teil des Fahrzeugs befestigt zu werden;
eine bewegliche Einheit (10) aufweisend:
wenigstens eine Aufnahmevorrichtung (5), die eingerichtet ist, das digitale Speichermedium (11) aufzunehmen;
wenigstens eine Kommunikationsvorrichtung, die eingerichtet ist, mit dem digitalen Datenspeichermediun (11) zu kommunizieren, um Daten in das digitale Datenspeichermedium (11) zu schreiben und/oder Daten aus dem digitalen Datenspeichermedium (11) zu lesen, und
die in Bezug auf die stationäre Einheit bewegbar ist zwischen
einer geöffneten Position, in der die Aufnahmevorrichtung (5) unterhalb der Öffnung (21) angeordnet ist, so dass ein digitales Datenspeichermedium (11) in die Aufnahmevorrichtung (5) eingeführt und aus dieser entnommen werden kann, und
einer geschlossenen Position, in der die Aufnahmevorrichtung (5) unter der Abdeckung (1c) angeordnet ist, so dass das digitale Datenspeichermedium (11), das in die Aufnahmevorrichtung (5) eingeführt worden ist, von wenigstens einem Bereich der wenigstens einen beweglichen Einheit (10) und der stationären Einheit (1) bedeckt wird, so dass das digitale Datenspeichermedium (11) von außerhalb der Vorrichtung (20) nicht sichtbar ist;
wobei die bewegliche Einheit (10) wenigstens eine elektrische Eingabevorrichtung (9) aufweist, die eingerichtet ist, einen Eingabebefehl von einem Benutzer entgegenzunehmen.

2. Vorrichtung (20) nach Anspruch 1, wobei die bewegliche Einheit (10) eingerichtet ist, gegenüber der stationären Einheit (1) eine wenigstens teilweise rotierende Bewegung durchzuführen, wenn sie sich zwischen der geöffneten Position und der geschlossenen Position bewegt.

3. Vorrichtung (20) nach Anspruch 1 oder 2, wobei die bewegliche Einheit (10) eingerichtet ist, gegenüber der stationären Einheit (1) eine wenigstens teilweise translatorische Bewegung durchzuführen, wenn sie sich zwischen der geöffneten und der geschlossenen Position bewegt.

4. Vorrichtung (20) nach einem der vorangehenden Ansprüche, wobei die bewegliche Einheit (10) wenigstens eine Aufnahmevorrichtung (5) aufweist und wobei das digitale Datenspeichermedium (11), das in die Aufnahmevorrichtung (5) eingeführt worden ist, unter einen Bereich (1c) bewegt wird, der einen Teil einer äußeren Fläche der stationären Einheit (1) bildet, so dass das digitale Datenspeichermedium (11) nicht von außerhalb der Vorrichtung (20) sichtbar ist, wenn die bewegliche Einheit (10) in ihre geschlossene Position bewegt worden ist.

5. Vorrichtung nach Anspruch 4, wobei das digitale Datenspeichermedium (11), das in die Aufnahmevorrichtung (5) eingeführt worden ist, angehoben wird, wenn die bewegliche Einheit (10) aus ihrer geschlossenen Position in ihre offene Position bewegt wird.

6. Vorrichtung (20) nach Anspruch 4 oder 5, wobei die bewegliche Einheit (10) zwei Schenkel aufweist, insbesondere einen ersten Schenkel, in dem die Aufnahmevorrichtung (5) angeordnet ist, und einen zweiten Schenkel, der als Bedienelement zum Bewegen der beweglichen Einheit (10) dient.

7. Vorrichtung (20) nach einem der vorangehenden Ansprüche, wobei die bewegliche Einheit (10) eine elektrische Ausgabevorrichtung (9) aufweist, die eingerichtet ist, einem Benutzer eine Ausgabe anzuzeigen.

8. Vorrichtung (20) nach Anspruch 7, wobei die elektrische Ausgabevorrichtung (9) integral mit der elektrischen Eingabevorrichtung (9) ausgebildet ist, z. B. in Form eines Touchpads und/oder eines berührungsempfindlichen Bildschirms, wobei die elektrische Eingabe-/Ausgabevorrichtung (9) insbesondere eine Beleuchtung aufweist, um wenigstens Teile der elektrischen Eingabe-/Ausgabevorrichtung (9) von hinten zu beleuchten.

9. Vorrichtung (20) nach Anspruch 7 oder 8, wobei die Eingabe- und/oder Ausgabevorrichtung (9) die stationäre Einheit (1) wenigstens teilweise bedeckt, wenn die bewegliche Einheit (10) in ihrer geschlossenen Position angeordnet ist.

10. Vorrichtung (20) nach einem der vorangehenden Ansprüche, die zusätzlich wenigstens eine Antriebsvorrichtung (4) aufweist, die eingerichtet ist, die bewegliche Einheit (10) zur Bewegung zwischen der geöffneten und der geschlossenen Position anzutreiben.

11. Vorrichtung (20) nach einem der vorangehenden Ansprüche, zusätzlich aufweisend wenigstens eine Dämpfungsvorrichtung (7), die eingerichtet ist, die Bewegung der beweglichen Einheit (10) zu dämpfen.

12. Vorrichtung (20) nach Anspruch 10 oder 11, wobei die Antriebsvorrichtung (4) und/oder die Dämpfungsvorrichtung (7) eine elastische Einheit aufweisen.

13. Vorrichtung (20) nach einem der vorangehenden Ansprüche, zusätzlich aufweisend wenigstens einen Verriegelungsmechanismus (6, 6a, 2b), der eingerichtet ist, die bewegliche Einheit (10) in ihrer offenen Position und/oder in ihrer geschlossenen Position zu verriegeln.

14. Vorrichtung (20) nach einem der vorangehenden Ansprüche, wobei die Aufnahmevorrichtung (5) eingerichtet ist, eine SD-Karte, eine Micro-SD-Karte und/oder einen USB-Stick aufzunehmen.

15. Fahrzeug, das wenigstens eine Vorrichtung (20) zum Aufnehmen eines digitalen Speichermediums (11) nach einem der vorangehenden Ansprüche aufweist, wobei die Vorrichtung (20) zum Aufnehmen eines digitalen Speichermediums (11) insbesondere in einer Mittelkonsole, zwischen den Rücksitzen und/oder am Armaturenbrett des Fahrzeugs angeordnet ist.

## Revendications

1. Appareil (20) destiné à recevoir un support de stockage de données numériques (11), l'appareil (20) étant conçu pour être disposé dans un véhicule, en particulier dans le compartiment passagers du véhicule, et comprenant :
une unité fixe (1) comprenant une ouverture (21) dans une partie avant de sa surface supérieure et un couvercle (1c) formé dans une partie arrière de son dessus et qui est conçue pour être fixée à au moins une partie du véhicule ;
une unité mobile (10) comprenant
au moins un dispositif de réception (5), qui est configuré pour recevoir le support de stockage de données numériques (11) ;
au moins un dispositif de communication, qui est configuré pour communiquer avec le support de stockage de données numériques (11) afin d'écrire des données dans le support de stockage de données numériques (11) et/ou de lire des données dans le support de stockage de données numériques (11) ; et
qui est mobile relativement à l'unité fixe (1) entre
une position ouverte, dans laquelle le dispositif de réception (5) est situé au-dessous de l'ouverture (21) de manière qu'un support de stockage de données numériques (11) puisse être inséré dans le dispositif de réception (5) et en être retiré, et
une position fermée, dans laquelle le dispositif de réception (5) est situé sous le couvercle (1c) de manière que le support de stockage numérique (11), qui a été inséré dans le dispositif de réception (5), soit couvert par au moins une partie de l'une de l'unité mobile (10) et de l'unité fixe (1), de manière que le support de stockage de données numériques (11) ne soit pas visible depuis l'extérieur de l'appareil (20) ;
dans lequel l'unité mobile (10) comprend au moins un dispositif d'entrée électrique (9), qui est configuré pour recevoir une instruction d'entrée provenant d'un utilisateur.

2. Appareil (20) selon la revendication 1, dans lequel l'unité mobile (10) est configurée pour effectuer un mouvement au moins partiellement de rotation relativement à l'unité fixe (1) lorsqu'elle se déplace entre la position ouverte et la position fermée.

3. Appareil (20) selon la revendication 1 ou 2, dans lequel l'unité mobile (10) est configurée pour effectuer un mouvement au moins partiellement de translation relativement à l'unité fixe (1) lorsqu'elle se déplace entre la position ouverte et la position fermée.

4. Appareil (20) selon l'une quelconque des revendications précédentes, dans lequel l'unité mobile (10) comprend l'au moins un dispositif de réception (5) et dans lequel le support de stockage de données numériques (11), qui a été inséré dans le dispositif de réception (5), est déplacé sous une partie (1c) faisant partie d'une surface extérieure de l'unité fixe (1), de manière que le support de stockage de données numériques (11) ne soit pas visible depuis l'extérieur de l'appareil (20) quand l'unité mobile (10) a été placée dans sa position fermée.

5. Appareil (20) selon la revendication 4, dans lequel le support de stockage de données numériques (11), qui a été inséré dans le dispositif de réception (5), est levé lorsque l'unité mobile (10) est déplacée de sa position fermée à sa position ouverte.

6. Appareil (20) selon la revendication 4 ou 5, dans lequel l'unité mobile (10) comprend deux pieds, en particulier un premier pied logeant le dispositif de réception (5) et un second pied servant de poignée pour déplacer l'unité mobile (10).

7. Appareil (20) selon l'une quelconque des revendications précédentes, dans lequel l'unité mobile (10) est pourvue d'un dispositif de sortie électrique (9) qui est configuré pour afficher une sortie à l'intention d'un utilisateur.

8. Appareil (20) selon la revendication 7, dans lequel le dispositif de sortie électrique (9) est intégré au dispositif d'entrée électrique (9), par exemple sous la forme d'un pavé tactile et/ou d'un écran tactile, le dispositif d'entrée/sortie électrique (9) comprenant en particulier un dispositif d'éclairage pour éclairer au moins des parties du dispositif d'entrée/sortie électrique (9) par l'arrière.

9. Appareil (20) selon la revendication 7 ou 8, dans lequel le dispositif d'entrée et/ou de sortie (9) couvre au moins partiellement l'unité fixe (1) quand l'unité mobile (10) est placée dans la position fermée.

10. Appareil (20) selon l'une quelconque des revendications précédentes, comprenant en outre au moins un dispositif d'entraînement (4) qui est configuré pour entraîner l'unité mobile (10) entre les positions ouverte et fermée.

11. Appareil (20) selon l'une quelconque des revendications précédentes, comprenant en outre au moins un dispositif d'amortissement (7) qui est configuré pour amortir le mouvement de l'unité mobile (10).

12. Appareil (20) selon la revendication 10 ou 11, dans lequel le dispositif d'entraînement (4) et/ou le dispositif d'amortissement (7) comprennent une unité élastique.

13. Appareil (20) selon l'une quelconque des revendications précédentes, comprenant en outre au moins un mécanisme de verrouillage (6, 6a, 2b) qui est configuré pour verrouiller l'unité mobile (10) dans sa position ouverte et/ou sa position fermée.

14. Appareil (20) selon l'une quelconque des revendications précédentes, dans lequel le dispositif de réception (5) est configuré pour recevoir au moins un élément parmi une carte SD, une carte micro SD et une clé USB.

15. Véhicule comprenant au moins un appareil (20) destiné à recevoir un support de stockage numérique (11) selon l'une quelconque des revendications précédentes, dans lequel l'appareil (20) destiné à recevoir un support de stockage numérique (11) est en particulier placé dans un pupitre central, entre les sièges arrière et/ou au niveau du tableau de bord du véhicule.
